# EUROPÄISCHE PATENTSCHRIFT

(11) **EP 3 166 299 B1**
(45) Veröffentlichungstag und Bekanntmachung des Hinweises auf die Patenterteilung: **13.03.2019**
(21) Anmeldenummer: 15192973.4
(22) Anmeldetag: 04.11.2015
(51) Int. Cl.: H04N 1/64, H04N 1/60

(54) **VERFAHREN ZUR MODIFIKATION EINES FARBANTEILSWERTE ENTHALTENDEN DATENSATZES**
METHOD FOR MODIFYING A DATA RECORD CONTAINING COLOUR PROPORTION VALUES
PROCEDE DE MODIFICATION D'UN ENSEMBLE DE DONNEES CONTENANT DES VALEURS DE PARTIE DE COULEUR

(43) Veröffentlichungstag der Anmeldung: 10.05.2017
(73) Patentinhaber: GMG GmbH & Co. KG, 72072 Tübingen (DE)
(72) Erfinder: Wurster, Jürgen, 72135 Dettenhausen (DE); Kramer, Henning, 72076 Tübingen (DE)
(74) Vertreter: Rausch Wanischeck-Bergmann Brinkmann

(56) Entgegenhaltungen:
- EP-A1- 1 168 825
- EP-A2- 1 524 844
- DE-A1-102004 003 300
- JP-A- 2004 289 201
- US-A1- 2007 211 277
- US-A1- 2010 157 331

## Beschreibung

Die Erfindung betrifft ein Verfahren zur Modifikation der Farbanteilswerte für eine ein Farbspektrum definierende Anzahl von Einzelfarben, die für die Erzeugung eines Druckerzeugnisses auf einer Zieldruckmaschine in einem Datensatz verwendet werden.

Im Stand der Technik ist es bekannt, dass Druckmaschinen Druckerzeugnisse herstellen, indem sequentiell unterschiedliche Anteile verschiedener Einzelfarben übertragen werden. US 2007/211277 A1 (KANEKO HIDEMI [JP] ET AL) 13. September 2007 (2007-09-13) offenbart ein Bilderzeugungsgerät mit einem Bildverarbeitungsteil, der Bilddaten in den Ausgabefarbraum umwandelt, einem Bilderzeugungsteil, der ein Bild aus konvertierten Daten erzeugt, einem Bildverarbeitungsteil, der die Farbe einer Nebenkomponente in eine dominante Komponentenfarbe reduziert.

Das Endergebnis des insgesamt überdeckten Bereiches ergibt dann optisch eine bestimmte Farbe. Diese Farbe kann mit farbmetrischen Mitteln gemessen und von anderen Farben differenziert werden. Der Anteil der zu übertragenden Einzelfarbe kann zwischen 0% und 100% liegen.

Zur Ansteuerung entsprechender Druckmaschinen ist es bekannt, Datensätze zu erzeugen, die für den einzelnen Bildpixel den jeweils prozentualen Anteil der zu verwendenden einzelnen Druckfarbe enthält. Die Anzahl der zu verwendenden Farben ergibt ein Farbspektrum, auch für jede einzelne Farbe des Farbspektrums wird für jeden einzelnen Druckpunkt der jeweilige Farbanteilswert festgelegt. Die entsprechende aus der Überdruckung entstehende Farbmischung ergibt am Ende den messbaren Farbwert.

Im Stand der Technik ist es bekannt, dass bei der Darstellung bestimmter Farben, also der Erzeugung bestimmter Farbwerte, einzelne Farben aus dem verwendeten Farbspektrum das Endergebnis ungünstig beeinflussen und den gesamten Farbwert ungünstig verändern können. So ist beispielsweise bekannt, dass für die Darstellung von Farbwerten, die die Farbe Braun repräsentieren, der Einsatz der Farbe Cyan ungünstig sein kann, da dieses dazu tendiert, im Farbeindruck Grün dominant zu präsentieren.

Ausgehend vom vorbeschriebenen Stand der Technik liegt der Erfindung die **Aufgabe** zugrunde, ein Verfahren zur Modifikation eines Farbanteilswerte enthaltenden Datensatzes bereitzustellen, welches es ermöglicht, den Anteil einer oder mehrerer Farben in einem vorgesehenen Farbspektrum generell auf null zu setzen und damit diese Farbe nicht zu verwenden.

Zur technischen **Lösung** dieser Aufgabe wird ein Verfahren mit den Merkmalen des Patentanspruches 1 vorgeschlagen. Weitere Vorteile und Merkmale ergeben sich aus den Unteransprüchen.

Erfindungsgemäß ist vorgesehen, zunächst einen Bildbereich des Druckerzeugnisses auszuwählen, d.h. einen Bereich des Datensatzes. Weiterhin wird festgelegt, welche Einzelfarben nicht verwendet werden sollen. Für den ausgewählten Bildbereich wird der Farbanteilswert für jeden Bildpixel ermittelt. Um den Farbanteilswert wird ein Toleranzbereich festgelegt.

Der Toleranzbereich ist ein Bereich um einen Farbwert beziehungsweise einen Farbanteilswert, welcher prozentual oder beispielsweise als Abstand im L*a*b*-Farbraum festgelegt werden kann. Er definiert einen Bereich um den jeweiligen Farbanteilswert, in welchem Farben liegen, die möglichst nahe an dem Farbspektrum des ursprünglichen Bildpixels liegen.

In einem weiteren Schritt wird nun ermittelt, welche Farbanteilswertekombinationen, die aus den restlichen Einzelfarben gebildet sind, Farbanteilswerte aufweisen, die möglichst nahe an dem Farbspektrum des ursprünglichen Bildpixels liegen. Schlussendlich werden in dem ausgewählten Bereich des Datensatzes die Farbanteilswerte durch die Farbanteilswerte aus der ausgewählten Farbanteilswertekombination ausgewechselt.

Somit ist erreicht, dass eine oder mehrere Einzelfarben nicht verwendet werden, obwohl schlussendlich aufgrund einer anderen Farbanteilswertekombination der übrigen Farben der gleiche optische bzw. möglichst ähnliche Farbeindruck im Druckverfahren erzeugt wird.

In vorteilhafter Weise liegen die Farbanteilswerte im Farbraum CMYK vor. Üblicherweise liegen die Farbanteilswerte der Einzelfarben zwischen 0% und 100%. Sehr niedrige prozentuale Bereiche sind industriell nicht reproduzierbar, beispielsweise der Bereich >0% aber < 3%. Die Erfindung schlägt vor, solche Farbanteilswertekombinationen auszuschließen, bei welchen einzelne Farben innerhalb des Ausschlussbereichs liegen.

Das gleiche gilt auch für den Gesamtfarbauftrag. Hier spricht man von TAC (total area coverage). Die Erfindung schlägt vor, den TAC nach oben hin zu beschränken, d.h., solche Farbanteilswertekombinationen auszuschließen, deren TAC den festgelegten TAC überschreitet.

In vorteilhafter Weise erfolgt die Auswahl des Datensatzbereiches anhand einer grafischen digitalen Präsentation des Druckerzeugnisses mittels grafischer Mittel. Hier kann mit einfachen Software-Tools eine beispielsweise rechteckige Bereichsauswahl erfolgen. Durch entsprechende Vergrößerungen können beliebig konturierte Bildbereiche festgelegt werden.

Mit der Erfindung wird ein einfaches Verfahren bereitgestellt, welches es ermöglicht, drucktechnisch für bestimmte Bereiche auf die Verwendung einer oder mehrerer Einzelfarben zu verzichten, beispielsweise im CMYK-Farbraum auf Cyan zu verzichten. Im vorgegebenen Bereich gibt es Anteile für CMYK, diese entsprechen im Druckerzeugnis einem bestimmten farbmetrisch messbaren Farbspektrum, das beispielsweise durch einen L*a*b*-Wert repräsentiert wird. Wird nun Cyan auf null gesetzt, werden die Farbanteilswertekombinationen von MYK gesucht, deren L*a*b*-Wert möglichst nahe an dem L*a*b*-Wert des ursprünglichen Bildpixels liegen. Somit kann durch Auswahl ein Austausch erfolgen mit dem Ergebnis, dass auf eine bestimmte Farbe völlig verzichtet wird, das Ergebnis jedoch von den Farbwerten her vergleichbar oder optimal ähnlich ist.

Weitere Vorteile und Merkmale ergeben sich aus der folgenden Beschreibung anhand der Figuren. Dabei zeigen:
- Fig. 1: die Darstellung eines Druckerzeugnisses
- Fig. 1a, b, c, d: Darstellungen die Farbanteilswerte der einzelnen Farben CMYK symbolisieren
- Fig. 2: die Darstellung des Druckerzeugnisses gemäß Fig. 1 mit einem ausgewählten Bereich
- Fig. 3: die Darstellung des Druckerzeugnisses gemäß Fig. 1 nach Modifikation des Datensatzes und
- Fig. 3a, b, c, d: Darstellungen die Farbanteilswerte der einzelnen Farben CMYK symbolisieren.

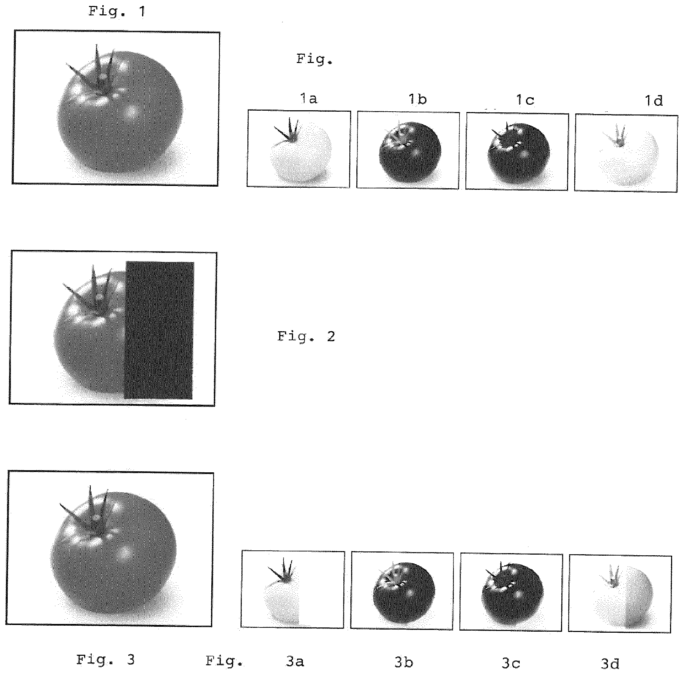

Fig. 1 zeigt beispielhaft als Druckerzeugnis die Darstellung einer Tomate. Dieses Druckerzeugnis wurde auf der Basis eines Original-Datensatzes erzeugt, welcher Farbanteilswerte für die Farben CMYK enthält. Dies sind die Farben Cyan, Magenta, Yellow und Black. Wie die Figuren 1a, b, c, d zeigen, enthält das Bild an den einzelnen Bildpunkten unterschiedliche Anteile der jeweiligen Farbe, was in den Einzelbildern symbolisiert ist.

Gemäß Fig. 2 soll nun ein bestimmter Bereich der bildlichen Darstellung ohne die Verwendung der Farbe Cyan erzeugt werden.

In den Figuren nicht sichtbar wird verfahrensgemäß nun also für jeden Bildpixel in dem Bereich der L*a*b*-Wert ermittelt. Es wird dann nach Farbanteilswertkombinationen gesucht, bei welchen der Anteil C = 0% ist und der L*a*b*-Wert der Kombination der übrigen drei Farben aber mit dem Ursprünglichen L*a*b*-Wert vergleichbar ist bzw. möglichst nahe ist. Nach Auswahl einer entsprechenden Kombination werden im Datensatz die Farbanteilswerte ausgetauscht.

Fig. 3 zeigt nun das Druckerzeugnis nach Modifikation des Datensatzes, wobei in den Figuren 3a, b, c, d nun die entsprechenden veränderten Anteile der übrigen Farben zu sehen sind, während in dem Bereich Cyan nicht mehr vorkommt. Man sieht einen höheren Anteil von Black und auch einen entsprechenden Anteil von Magenta.

War beispielsweise ursprünglich in der CMYK-Farbanteilswertekombination C = 30, M = 50, Y = 60 und K = 20, so mag nach der Modifikation eine Kombination verwendet werden mit C = 0, M = 45, Y = 60 und K = 55.

Das beschriebene Ausführungsbeispiel dient nur der Erläuterung und ist nicht beschränkend.

## Patentansprüche

1. Verfahren zur Modifikation der Farbanteilswerte für eine ein Farbspektrum definierende Anzahl von Einzelfarben, die für die Erzeugung eines Druckerzeugnisses auf einer Zieldruckmaschine in einem Datensatz verwendet werden, wobei
a) ein Bereich des Datensatzes ausgewählt wird, der einem festgelegten Bildbereich des Druckerzeugnisses entspricht,
b) die farbmetrisch feststellbaren Farbwerte für den ausgewählten Bereich ermittelt werden,
c) ein Toleranzbereich um die ermittelten Farbwerte festgelegt wird,
d) eine oder mehrerer Einzelfarben, die nicht verwendet werden sollen, festgelegt werden, wodurch deren Farbanteilswerte auf null gesetzt werden,
e) Farbanteilswertkombinationen aus den übrigen Einzelfarben ermittelt werden, deren Farbwerte innerhalb des Toleranzbereichs liegen und somit das ursprüngliche Farbspektrum bestmöglich reproduzieren,
f) die ermittelten Farbanteilskombinationen ausgewählt werden,
g) die Farbanteilswerte in dem ausgewählten Bereich durch die ausgewählten Farbanteilskombinationen ausgetauscht werden.

2. Verfahren nach Anspruch 1, **dadurch gekennzeichnet, dass** die Farbanteilswerte im Farbraum CMYK festgelegt sind.

3. Verfahren nach einem der vorhergehenden Ansprüche, **dadurch gekennzeichnet, dass** die Farbwerte im L*a*b* -Farbraum festgelegt sind.

4. Verfahren nach einem der vorhergehenden Ansprüche, **dadurch gekennzeichnet, dass** im Schritt f) Farbanteilskombinationen ausgeschlossen werden, welche Farbanteilswerte innerhalb eines vorgegebenen Toleranzspektrums enthalten.

5. Verfahren nach Anspruch 4, **dadurch gekennzeichnet, dass** das Toleranzspektrum in den Bereich zwischen 0 % und einer oberen Grenze, die durch die industrielle Reproduzierbarkeit vorgegebenen wird, festgelegt wird.

6. Verfahren nach einem der vorhergehenden Ansprüche, **dadurch gekennzeichnet, dass** das Toleranzspektrum durch in einem Farbraum liegende Abstandswerte gebildet wird.

7. Verfahren nach einem der vorhergehenden Ansprüche, **dadurch gekennzeichnet, dass** im Verfahrensschritt f) solche Farbanteilskombinationen ausgeschlossen werden, die einen vorgegebenen Gesamtfarbauftragswert überschreiten.

8. Verfahren nach einem der vorhergehenden Ansprüche, **dadurch gekennzeichnet, dass** die Auswahl des Bereiches des Datensatzes gemäß Verfahrensschritt a) grafisch anhand einer digitalen Präsentation des Druckerzeugnisses erfolgt.

## Claims

1. A method for the modification of the colour proportion values of a number of individual colours defining a colour spectrum, which individual colours will be used in a data set for generating a printed matter on a target printing machine, wherein:
a) a portion of the data set will be selected, which corresponds to a fixed image zone of the printed matter,
b) the colour values that can be determined in a colorimetric manner will be determined for the selected portion,
c) a tolerance range will be fixed around the determined colour values,
d) one or more individual colours that shall not be used will be determined, whereby the colour proportion values thereof will be set to zero,
e) colour proportion value combinations will be determined from the other individual colours, the colour values of which are comprised within the tolerance range and thus reproduce the original colour spectrum as best as possible,
f) the determined colour proportion combinations will be selected,
g) the colour proportion values in the selected range will be replaced with the selected colour proportion combinations.

2. A method according to claim 1, **characterized in that** the colour proportion values are specified within the colour space CMYK.

3. A method according to one of the preceding claims, **characterized in that** the colour values are specified in the L*a*b'* colour space.

4. A method according to one of the preceding claims, **characterized in that** in step f) such colour proportion combinations are excluded which comprise colour proportion values within a predetermined tolerance spectrum.

5. A method according to claim 4, **characterized in that** the tolerance spectrum will be defined within the range comprised between 0 % and an upper limit that is given by the industrial reproducibility.

6. A method according to one of the preceding claims, **characterized in that** the tolerance spectrum will be formed by distance values that are comprised within a colour space.

7. A method according to one of the preceding claims, **characterized in that** in process step f) such colour proportion combinations are excluded which exceed a predefined total area coverage value.

8. A method according to one of the preceding claims, **characterized in that** the selection of the portion of the data set according to process step a) will be realized graphically by means of a digital presentation of the printed matter.

## Revendications

1. Procédé de modification des valeurs de fraction de couleur pour un nombre de couleurs individuelles définissant un spectre de couleurs, lesquelles couleurs individuelles sont utilisées dans un jeu de données pour générer un produit imprimé sur une imprimante cible, dans lequel
a) une partie du jeu de données est sélectionnée, laquelle correspond à une zone d'image déterminée du produit imprimé,
b) les valeurs de couleur susceptibles d'être déterminées de manière colorimétrique sont déterminées pour la partie sélectionnée,
c) une plage de tolérance est fixée autour des valeurs de couleur déterminées,
d) une ou plusieurs couleur(s) individuelle(s) qu'il ne faut pas utiliser sont déterminées, fixant ainsi les valeurs de fraction de couleur de celles-ci à zéro,
e) des combinaisons de valeurs de fraction de couleur sont déterminées à partir des autres couleurs individuelles, dont les valeurs de couleur sont comprises dans la plage de tolérance et reproduisent ainsi le mieux que possible le spectre de couleurs original,
f) les combinaisons de fractions de couleur déterminées sont sélectionnées,
g) les valeurs de fractions de couleur dans la plage sélectionnée sont remplacées par les combinaisons de fractions de couleur sélectionnées.

2. Procédé selon la revendication 2, **caractérisé en ce que** les valeurs de fractions de couleur sont fixées dans l'espace colorimétrique CMYK.

3. Procédé selon l'une des revendications précédentes, **caractérisé en ce que** les valeurs de couleur sont fixées dans l'espace colorimétrique L*a*b*.

4. Procédé selon l'une des revendications précédentes, **caractérisé en ce que** dans l'étape f) de telles combinaisons de fractions de couleur sont exclues, qui comprennent des valeurs de fraction de couleur comprises dans un spectre de tolérance prédéterminé.

5. Procédé selon la revendication 4, **caractérisé en ce que** le spectre de tolérance est spécifié à la plage comprise entre 0 % et une limite supérieure, qui est prédéfinie par la reproductibilité industrielle.

6. Procédé selon l'une des revendications précédentes, **caractérisé en ce que** le spectre de tolérance est formé par des valeurs de distance, qui sont comprises dans un espace colorimétrique.

7. Procédé selon l'une des revendications précédentes, **caractérisé en ce que** dans l'étape f) de telles combinaisons de fractions de couleur sont exclues, qui excèdent une valeur de l'encrage total prédéfinie.

8. Procédé selon l'une des revendications précédentes, **caractérisé en ce que** la sélection de la partie du jeu de données selon l'étape de procédé a) est effectuée de manière graphique à l'aide d'une présentation digitale du produit imprimé.
